# EUROPÄISCHE PATENTSCHRIFT

(11) **EP 0 405 005 B1**
(45) Veröffentlichungstag und Bekanntmachung des Hinweises auf die Patenterteilung: **16.06.1993**
(21) Anmeldenummer: 89113496.7
(22) Anmeldetag: 22.07.1989
(51) Int. Cl.: D03D 1/00, B60R 22/12

(54) **Gurtband für Sicherheitsgurte**
Webbing for safety belts
Bande pour ceintures de sécurité

(30) Priorität: 30.06.1989 EP 89111896
(43) Veröffentlichungstag der Anmeldung: 02.01.1991
(73) Patentinhaber: Elastic-Berger GmbH & Co., D-73553 Alfdorf (DE)
(72) Erfinder: Berger, Johann, D-7077 Alfdorf (DE); Berger, Josef, D-7070 Schwäbisch Gmünd-Grossdeinbach (DE)
(74) Vertreter: Schroeter, Helmut

(56) Entgegenhaltungen:
- DE-A- 2 902 905
- FR-A- 2 186 836

## Beschreibung

Die Erfindung bezieht sich auf ein Gurtband für Sicherheitsgurte für Fahrzeuge, insbesondere Kraftfahrzeuge. Das Gurtband soll eine möglichst reibungsarme Außenfläche haben, damit es im Sicherheitsgurtsystem, d. h. im Aufwickelgerät, am Umlenkbeschlag oben an der Karosserie und am Einsteckbeschlag unten mit möglichst wenig Reibung durchlaufen kann. Derartige Bänder werden in der Fachsprache auch "Low-friction-Bänder" genannt. Je geringer die Reibung, desto größer der für das Spannen und Aufwickeln nutzbare Kraftanteil der Aufwickelfeder. Bei Gurtbändern sehr geringer Reibung kann eine schwächere Feder vorgesehen werden als sonst üblich. Durch diese wird vorteilhafterweiser weniger Druck auf den Körper der gesicherten Person ausgeübt, als von bisher üblichen Federn. Somit wird der Tragekomfort des Sicherheitsgurtes erhöht.

Eine geringere Reibung der Gurtbänder ist auch bei tiefen Außentemperaturen von Bedeutung. Die aus Federstahl bestehende Aufwickelfeder wird bei niedriger Temperatur härter und kann nur weniger Zug auf das Gurtband ausüben. Auch das Gurtband wird härter und leistet dort, wo es sich biegen muß, vor allem um den Umlenkbeschlag, mehr Walkarbeit. Dies kann dazu führen, daß das Gurtband nach dem Ablegen nicht mehr vollständig aufgewickelt wird, so daß ein Teil des Gurtbandes aus der Türöffnung heraushängt. Sofern der Fahrer dies nicht bemerkt, kann er eine Schleife des Gurtbandes in die Tür klemmen. Hierdurch kann das Gurtband, insbesondere, wenn es im Bereich des Türschlosses eingeklemmt wird, beschädigt werden. Andererseits besteht die Gefahr, daß der Fahrer nach dem Abnehmen des Gurtbandes beim Aussteigen in eine heraushängende Schlaufe des Gurtbandes tritt, dabei das Gurtband beschädigt und möglicherweise sich selbst verletzt.

### Stand der Technik

Es ist bekannt, Gurtbänder dadurch reibungsarm zu machen, daß eine Avivage aufgetragen wird, nämlich ein chemisches Produkt, das an der Außenseite des Gurtbandes haftet und die Reibung vermindert. Nachteil dieser bekannten Methode ist es, daß die Avivage nach einiger Zeit des Gebrauchs teilweise abgerieben ist und ihren Zweck, das Band reibungsarm zu machen, nicht mehr erfüllt. Auch durch chemische Umwelteinflüsse kann die Avivage zerstört werden.

Gurtbänder, die für Anwendung in Kraftfahrzeugen geliefert werden, müssen eine Scheuerprüfung bestehen, die in der US-Norm MVSS, Nr. 209 (§ 571.209) festgelegt ist. (Veröffentlicht im USA Federal Register, Volume 36, Nr. 232, vom 2. 12. 1971). Nach dieser Norm wird ein Gurtband zunächst einer Scheuerprüfung unterzogen. Anschließend wird es bis zum Bruch gestreckt, und es wird die Bruchlast ermittelt. Diese muß dann noch mindestens 75 bis 85 % der Originalbruchlast betragen. Andernfalls wird das Gurtband von den zuständigen nationalen Behörden zur Verwendung als Sicherheitsgurt in Kraftfahrzeugen nicht zugelassen.

Ein Gurtband, bei dem die Avivage verlorengegangen ist, wird durch Abrieb in unzulässig kurzer Zeit soweit geschwächt, daß es nicht mehr die erforderliche Mindestbruchlast hat. Die Sicherheit des Benutzers ist dann nicht mehr gewährleistet.

Bekannt sind Gurtbänder, deren Kapillaren 8 bis 14 dtex haben. Damit diese die Scheuerprüfung bestehen, ist entweder eine Avivage erforderlich, was die oben erwähnten Nachteile hat, oder eine Zwirnung von 80 bis 100 Umdrehungen pro Meter.

### Aufgabe und Lösungen

Durch die vorliegende Erfindung soll ein Gurtband geschaffen werden, das während seiner gesamten Lebensdauer reibungsarm bleibt und bei dem die Verwendung einer Avivage überflüssig ist. Diese Aufgabe wird nach Anspruch 1 gelöst.

Wesentlicher Bestandteil dieser Lösung ist es, die Kettfäden, aus denen das Gurtband gewebt wird, unter Verwendung von relativ dicken Kapillaren (= Filamenten) herzustellen und dementsprechend weniger Kapillaren, als bisher üblich, zu verwenden. Die vorteilhaften Wirkungen treten bereits bei Kapillaren von 15 dtex ein. (dezitex = Gewicht der Kapillare in Gramm je 10 000 m Länge). Da eine Avivage nicht mehr aufzubringen ist, entfallen deren Kosten.

Die Kettfäden bleiben ungezwirnt. Dies hat den hier wichtigen Vorteil, daß das daraus gewebte Gurtband eine besonders hohe Biegesteifigkeit hat. Dieses Gurtband hat gewissermaßen eine hohe "Sprungkraft". Faltet man ein Endstück eines solchen Bandes um, so springt es wesentlich kräftiger und schneller wieder zurück als das bei einem Band aus gezwirnten Kettfäden der Fall ist.

Die Kettfäden werden ferner stellenweise mit Preßluft verwirbelt, oder, wie es in der Fachsprache heißt, "(ge)tangled". Hierdurch wird der Zusammenhalt der Kapillaren der Kettfäden erhöht, was für den Webvorgang wichtig ist. Durch die Luftverwirbelung erhöht sich die Reibung der Fäden nicht, so daß man mit ungezwirnten und luftverwirbelten Fäden besonders reibungsarme Gurtbänder erzielen kann. Diese Lösung hat den Vorteil, daß der Kostenaufwand für den Zwirnvorgang eingespart werden kann.

Mit ungezwirnten und luftverwirbelten Kettfäden erzielt man Gurtbänder höherer Längssteifigkeit. Hieraus ergeben sich zwei vorteilhafte Wirkungen:
- weniger Walkarbeit, d.h. Reibungsarbeit beim Umlaufen der Beschläge und
- eine in Umfangsrichtung kürzere Anlagefläche am Umlenkbeschlag, also wiederum weniger Reibung.

### Weiterbildungen der Erfindung

ergeben sich aus den Unteransprüchen.

Die Stellen, an denen die Kettfäden verwirbelt sind, können gegenseitige Abstände von 5 bis 15 cm haben.

Nach Anspruch 3 ergeben sich besonders reibungsarme, und entsprechend der oben genannten US-Norm abriebfeste Bänder, wenn die Kettfäden Kapillaren von 16 bis 22 dtex haben. Bei noch dickeren Kapillaren wäre die Bruchlast zu niedrig. Besonders günstig sind Kapillaren von 17 dtex.

Ausführungsbeispiele mit weiteren Merkmalen der Erfindung werden im folgenden anhand der Zeichnungen beschrieben.
- Figur 1: zeigt ein Stück Gurtband in Draufsicht.
- Figur 2: zeigt, oben in Seitenansicht, unten im Querschnitt, stark schematisiert, einen Kettfaden nach der Erfindung.

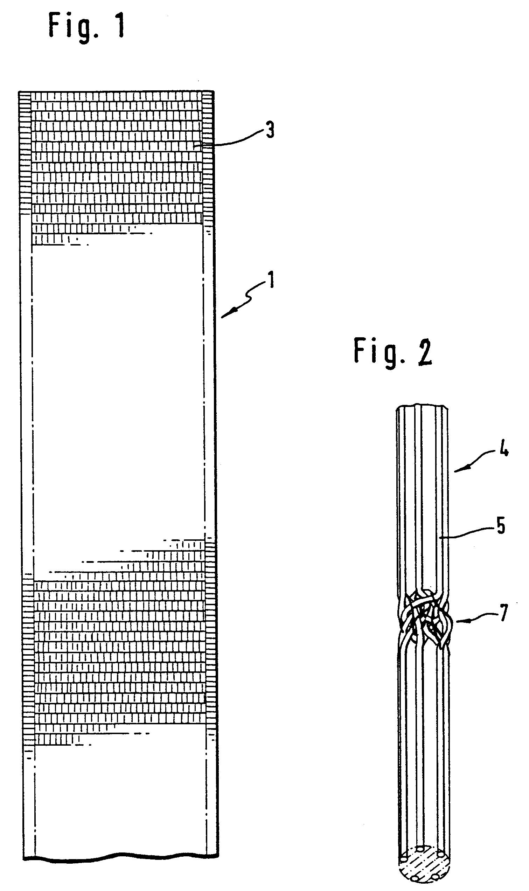

Figur 1 zeigt ein Stück eines Gurtbandes 1 mit seinen Kettfäden 3. Die dargestellte Struktur kommt in an sich bekannter Weise durch die Webart zustande. Die ganze Oberfläche des Gurtbandes wird von Kettfäden 3 gebildet, während die Schußfäden völlig im Innern des Gewebes verschwinden.

Figur 2 zeigt, stark schematisiert, einen ungezwirnten Kettfaden 4, der, wie dort oben und unten dargestellt, zueinander parallel verlaufende Kapillaren (Filamente) 5 hat. Diese sind relativ dick im Verhältnis zum Durchmesser des ganzen Kettfadens 4. Am unteren Ende der Fig. 2 sind einige Kapillaren 5 im Schnitt dargestellt. Die Kapillaren 5 haben eine Stärke von mindestens 15, insbesondere 17 dtex. (dezitex = Gewicht der Kapillare in Gramm je 10 000 m Länge). An einer Stelle 7 des Kettfadens sind die Kapillaren miteinander durch Preßluft verwirbelt, wodurch die Kapillaren aneinander gebunden werden. Solche Stellen finden sich alle 5 bis 15 cm in Längsrichtung des Kettfadens 4. Der Kettfaden 4 ist ungezwirnt.

Aus Kettfäden nach Figur 2 wird in an sich bekannter Weise das Gurtband gewebt. Damit ergibt sich - infolge der Verwendung ungezwirnter Fäden - ein Gurtband einer höheren Längssteifigkeit als bisher üblich, das beim Umlaufen der Beschläge weniger Walkarbeit leistet.

Diese Walkarbeit ergibt sich daraus, daß beim Umbiegen in einem Beschlag die außen liegenden Bereiche des Gurtbandes gedehnt und die innen liegenden gestaucht werden. Dies bedeutet Reibungsarbeit und damit einen höheren Widerstand gegenüber der Zugkraft der Aufwickelfeder.

Gurtbänder höherer Längssteifigkeit nach der Erfindung liegen in ihrer Längsrichtung ein kürzeres Stück an einem zu umlaufenden Steg eines Beschlages an, als herkömmliche Gurtbänder. Dadurch wird die Walkarbeit herabgesetzt und die Aufwickelfeder entlastet.

Auf die Ausbildung und die Reibungseigenschaften des Schußfadens kommt es hier nicht an, da der Schußfaden im Gewebe verschwindet.

Das Gurtband wird in üblicher Weise weiterverarbeitet. Es wird keine Avivage aufgetragen.

Während nach Abrieb oder chemischer Zerstörung einer Avivage herkömmlicher Art das Gurtband verschleißt und dadurch seine Bruchlast auf einen unzulässig niedrigen Wert herabgesetzt werden kann, bleibt ein Gurtband nach der Erfindung auch ohne Avivage reibungsarm und verschleißt nur in einem Ausmaß, daß weit unterhalb des zulässigen Grenzwertes nach der oben genannten US-Norm liegt.

## Patentansprüche

1. Gurtband (1) für Sicherheitsgurte, dadurch **gekennzeichnet**, daß, zur Erzeugung eines möglichst reibungsarmen (low friction) Gurtbandes, die Kettfäden (4), die in das Gurtband verwebt werden,
- Kapillaren (5) von mindestens 15 dtex haben,
- ungezwirnt sind und
- stellenweise (bei 7) mit Preßluft verwirbelt (tangled) sind.

2. Gurtband nach Anspruch 1, dadurch **gekennzeichnet**, daß die Stellen (7), an denen die Kettfäden verwirbelt sind, gegenseitige Abstände von 5 bis 15 cm haben.

3. Gurtband nach Anspruch 1, dadurch **gekennzeichnet**, daß die Kettfäden (4) Kapillaren (5) von 16 bis 22 dtex, insbesondere von 17 dtex haben.

## Claims

1. Belt strap (1) for safety belts, characerised in that in order to produce a low friction a belt strap as possible, the warp threads (4), which are woven into the belt strap,
- have filaments (5) of at least 15 dtex,
- are untwined and
- are tangled at certain points (7) with compressed air.

2. Belt strap as claimed in Claim 1, characterised in that the points (7) at which the warp threads are tangled are spaced from one another by 5 to 15 cm.

3. Belt strap as claimed in Claim 1, characterised in that the warp threads (4) have filaments (5) of 16 to 22 dtex, particularly 17 dtex.

## Revendications

1. Sangle de ceinture (1) pour ceintures de sécurité, caractérisée en ce que, pour la production d'une sangle de ceinture à frottement aussi faible que possible (low friction), les fils de chaîne (4) qui sont incorporés par tissage dans la sangle de ceinture :
- ont des capillaires ou filaments (5) d'au moins 15 dtex,
- sont non retors, et
- sont entremêlés (tangled) localement (en 7) au moyen d'air comprimé.

2. Sangle de ceinture selon la revendication 1, caractérisée en ce que les endroits (7) où les fils de chaîne sont entremêlés ont entre eux des espacements de 5 à 15 cm.

3. Sangle de ceinture selon la revendication 1, caractérisée en ce que les fils de chaîne (4) ont des capillaires ou filaments de 16 à 22 dtex, en particulier de 17 dtex.
